# EUROPÄISCHE PATENTSCHRIFT

(11) **EP 1 252 044 B1**
(45) Veröffentlichungstag und Bekanntmachung des Hinweises auf die Patenterteilung: **22.11.2006**
(21) Anmeldenummer: 01984713.6
(22) Anmeldetag: 14.12.2001
(51) Int. Cl.: B60R 16/02, B60R 21/01

(54) **VORRICHTUNG ZUR DATEN- UND/ODER ENERGIEÜBERTRAGUNG ZU RÜCKHALTEMITTELN IN EINEM FAHRZEUG**
DEVICE FOR TRANSFERRING DATA AND/OR ENERGY TO RESTRAINING MEANS IN A VEHICLE
DISPOSITIF DE TRANSMISSION DE DONNEES ET/OU D'ENERGIE A DES SYSTEMES DE RETENUE DANS UN VEHICULE

(30) Priorität: 24.01.2001 DE 10102994
(43) Veröffentlichungstag der Anmeldung: 30.10.2002
(73) Patentinhaber: ROBERT BOSCH GMBH, 70442 Stuttgart (DE)
(72) Erfinder: KAZMIERCZAK, Harald, 71717 Beilstein (DE)
(86) Internationale Anmeldenummer: PCT/DE2001/004762
(87) Internationale Veröffentlichungsnummer: WO 2002/058966

(56) Entgegenhaltungen:
- EP-A- 0 389 779
- EP-A- 0 437 642
- DE-A- 19 512 500
- DE-C- 19 744 760
- US-A- 4 904 196

## Beschreibung

### Stand der Technik

Die Erfindung geht aus von einer Vorrichtung zur Daten- und/oder Energieübertragung zu einem Rückhaltesystem nach der Gattung des unabhängigen Patentanspruchs.

Es ist bereits bekannt, Übertrager einzusetzen, um Daten und Energie an Rückhaltemittel in beweglichen Teilen, wie es jeweils ein Sitz oder ein Lenkrad ist, zu übertragen. Solche Übertrager werden insbesondere für Rückhaltesysteme verwendet. Der jeweilige Sitz oder das Lenkrad sind dabei herausnehmbar und auch wieder einbaubar. Die Übertragung der Daten und der Energie muß auch nach dem Wiedereinbau fehlerfrei funktionieren. Durch die Verwendung der Übertrager und damit einer Nahfeldübertragung wird vermieden, dass die Abnutzung oder Unzuverlässigkeit von Steckern das Rückhaltesystem negativ beeinflusst. Die Sekundärseite des jeweiligen Übertragers ist dabei jeweils im Sitz beziehungsweise Lenkrad angeordnet, während die Primärseite direkt mit dem Chassis verbunden ist.

Die DE 19744760 zeigt den Oberbegriff des Anspruchs 1.

### Vorteile der Erfindung

Die erfindungsgemäße Vorrichtung zur Daten- und/oder Energieübertragung zu einem Rückhaltesystem in einem Fahrzeug mit den Merkmalen des unabhängigen Patentanspruchs hat demgegenüber den Vorteil, dass eine Induktionsspannung, die naturgemäß aufgrund des Induktionsgesetzes beim Herausnehmen eines beweglichen Fahrzeugteils entsteht, an der Sekundärseite kurzgeschlossen wird und so zu keiner Fehlauslösung von den Rückhaltemitteln führen kann. Dafür wird vorteilhafterweise ein Reedkontakt verwendet, der auf der Sekundärseite angeordnet ist, während die Primärseite einen entsprechenden Magneten aufweist, so dass beim Entfernen dieses Magneten der Reedkontakt geschlossen wird. Dies führt dann zu einem Kurzschluß der Wicklung der Sekundärseite. Damit wird die induzierte Spannung an der Sekundärseite ebenfalls kurzgeschlossen. Letztlich erhöht dies die Sicherheit des Fahrzeugs.

Durch die in den abhängigen Ansprüchen aufgeführten Maßnahmen und Weiterbildungen sind vorteilhafte Verbesserungen der im unabhängigen Patentanspruch angegebenen Vorrichtung zur Daten- und/oder Energieübertragung zu einem Rückhaltesystem in einem Fahrzeug möglich.

Besonders vorteilhaft ist, dass das erste Fahrzeugteil als Chassis ausgebildet ist und das zweite Fahrzeugteil als Sitz, wobei dann der Sitz herausnehmbar ist. Auf der Sekundärseite sind dabei die Rückhaltemittel sowie die Mittel zur Diagnose und Ansteuerung der Rückhaltemittel angeordnet.

### Zeichnung

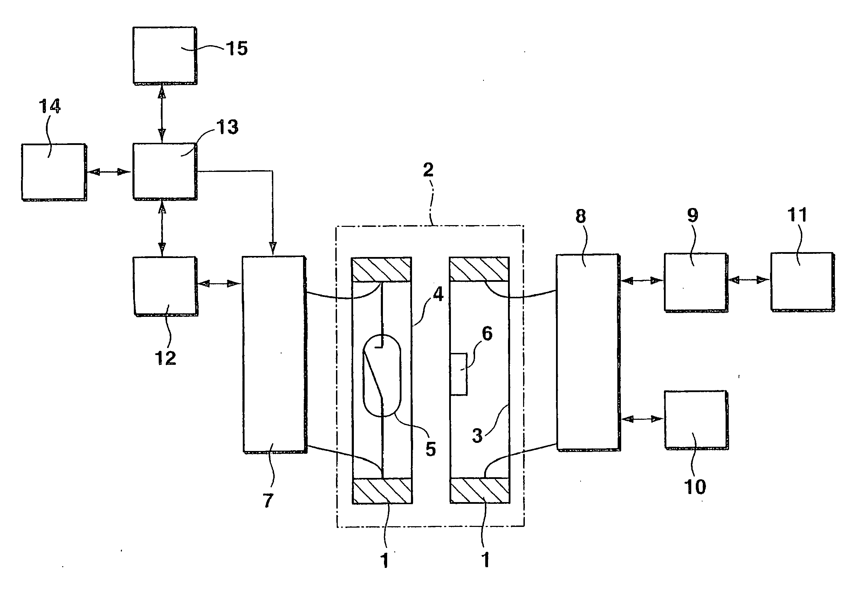

Ausführungsbeispiele der Erfindung sind in der Zeichnung dargestellt und werden in der nachfolgenden Beschreibung näher erläutert. Es zeigt
Figur 1 ein Blockschaltbild der erfindungsgemäßen Vorrichtung.

### Beschreibung

Da Airbags, insbesondere für den Seitenaufprall, auch in Sitzen angeordnet werden, ist die Datenübertragung zu der Elektronik der Rückhaltemittel in dem Sitz von entscheidender Bedeutung. Um dies aufgrund einer besseren Handhabung, weniger Verschmutzung, höherer Robustheit mit Übertragern zu bewerkstelligen, stellt sich das Problem einer Induktionsspannung, die bei einem Herausnehmen des Sitzes oder auch bei einem Einbau des Sitzes auftritt. Insbesondere bei solchen Fahrzeugen wie den sogenannten Sports Utility Vehicles (SUV), bei denen zu erwarten ist, dass ein Benutzer häufig einen oder mehrere Sitze ausbauen wird, wird sich dieses Problem verschärfen.

Erfindungsgemäß wird daher ein Reedkontakt vorgesehen, der beim Herausnehmen des Sitzes sich schließt und so die Wicklung der Sekundärseite des Übertragers, die sich in einem jeweiligen Sitz befindet, kurzschließt. Damit werden Induktionsspannungen, die an der Sekundärseite entstehen und gegebenenfalls die Rückhaltemittel auslösen könnten, ebenfalls kurzgeschlossen.

Figur 1 zeigt als Blockschaltbild die erfindungsgemäße Vorrichtung. Ein Übertrager 2 weist eine Primärseite 3 und eine Sekundärseite 4 auf. Die Primärseite 3 ist im Chassis untergebracht, während die Sekundärseite 4 im Sitz angeordnet ist. Die Primär- 3 und die Sekundärseite 4 weisen jeweils Spulen 1 auf. Die Spulen sind dann jeweils an Treiber 7 und 8 angeschlossen. An der Primärseite 3 ist weiterhin ein Magnet 6 angeordnet, der genau gegenüber einem Reedkontakt 5 eingebaut ist, wobei der Reedkontakt 5 in der Sekundärseite des Übertragers 2 angeordnet ist.

Im eingebauten Zustand ist der Reedkontakt 5 aufgrund des Magneten 6 geöffnet. Damit können Daten, die über die Nahfeldübertragung durch die magnetische Kopplung von der Primärseite 3 auf die Sekundärseite 4 übertragen werden, von dem Treiber 7 aufgenommen werden. Neben Daten können hier auch Energieübertragungen stattfinden, denn die Rückhaltemittel, beispielsweise Airbags und Gurtstraffer in den Sitzen, mit der Ansteuerelektronik müssen mit elektrischer Energie versorgt werden. Weiterhin ist auf der Sekundärseite eine Energiereserve für die Rückhaltemittel vorhanden, so dass auch bei einem Abreißen der Energieversorgung die Rückhaltemittel ausgelöst werden können.

An den Treiber 8 ist einerseits eine Energieversorgung 10 und andererseits ein Steuergerät 9 über einen Datenein-/-ausgang angeschlossen. Das Steuergerät 9 ist über seinen zweiten Datenein-/-ausgang mit einem Sensor 11 verbunden, der einen Aufprall anzeigt. Beispielhaft ist hier nur ein Sensor aufgeführt, der hier ein Beschleunigungssensor ist, es können jedoch auch weitere Sensoren, insbesondere auch im Steuergerät 9 selbst, angeordnet sein. Die Verbindung zu diesen Sensoren kann über einen Bus erfolgen.

Das Steuergerät 9 berechnet den Auslösealgorithmus und wertet Daten, die von dem Rückhaltemitteln kommen, also vor allem Diagnosedaten, aus und wird im Falle eines Aufpralls, der eine Auslösung von Rückhaltemitteln nach sich zieht, einen entsprechenden Befehl über den Übertrager 2 versenden. Damit wird also ein Zündbefehl übertragen.

An den Treiber 7 ist eine Zündkreisansteuerung 13 über einen ersten Datenein-/-ausgang und ein Prozessor 12 über einen zweiten Datenein-/-ausgang verbunden. Der Prozessor 12 führt Diagnosen der auf der Sekundärseite angeordneten Baugruppen durch. Die Zündkreisansteuerung 13 steuert die Rückhaltemittel 15 an, die über einen dritten Datenein-/-ausgang mit der Zündkreisansteuerung 13 verbunden sind. Über einen Ein-/Ausgang ist weiterhin eine Energiereserve 14 mit der Zündkreisansteuerung 13 verbunden. Die Energiereserve 14 ist beispielsweise ein Kondensator, der bei einer Unterbrechung der Verbindung zwischen Primärseite und Sekundärseite noch Energie liefern soll, um die Rückhaltemittel 15 entsprechend anzusteuern. Die Rückhaltemittel 15 ist hier ein Airbag, es ist jedoch auch ein Gurtstraffer möglich. Die Zündkreisansteuerung 14 führt auch Diagnosen durch, beispielsweise, ob die Zündpillenwiderstände, mit denen die Rückhaltemittel 15 gezündet werden, noch die korrekten Widerstände aufweisen und damit eine korrekte Funktion ermöglichen.

## Patentansprüche

1. Vorrichtung zur Daten- und/oder Energieübertragung zu Rückhaltemitteln in einem Fahrzeug, wobei die Vorrichtung einen Übertrager (2), der seine Primärseite (3) in einem ersten Fahrzeugteil und seine Sekundärseite (4) in einem zweiten Fahrzeugteil aufweist, wobei das erste und/oder das zweite Fahrzeugteil herausnehmbar sind, **dadurch gekennzeichnet, dass** die Sekundärseite (4) einen Reedkontakt (5) und die Primärseite einen Magneten (6) aufweisen, wobei beim Herausnehmen des ersten Fahrzeugteils sich der Reedkontakt zum Kurzschließen der Wicklung der Sekundärseite (4) schließt.

2. Vorrichtung nach Anspruch 1, **dadurch gekennzeichnet, dass** das erste Fahrzeugteil als Chassis und das zweite Fahrzeugteil als Sitz ausgebildet sind.

3. Vorrichtung nach Anspruch 1 oder 2, **dadurch gekennzeichnet, dass** auf der Sekundärseite die Rückhaltemittel (15), Mittel (13, 12) zur Diagnose und zur Ansteuerung der Rückhaltemittel (15) angeordnet sind.

## Claims

1. Device for transferring data and/or energy to restraining means in a vehicle, the device having a transformer (2) which has its primary side (3) in a first vehicle component and its secondary side (4) in a second vehicle component, the first and/or second vehicle component being removable, **characterized in that** the secondary side (4) has a reed contact (5) and the primary side has a magnet (6), the reed contact closing in order to short-circuit the winding of the secondary side (4) when the first vehicle component is removed.

2. Device according to Claim 1, **characterized in that** the first vehicle component is embodied as a chassis, and the second vehicle component is embodied as a seat.

3. Device according to Claim 1 or 2, **characterized in that** the restraining means (15) and the means (13, 12) for diagnosing and actuating the restraining means (15) are arranged on the secondary side.

## Revendications

1. Dispositif pour la transmission de données et/ou d'énergie à des systèmes de retenue dans un véhicule, selon lequel le dispositif comprend un transmetteur (2), ayant son côté primaire (3) dans une première partie du véhicule et son côté secondaire (4) dans une deuxième partie du véhicule, la première et/ou la deuxième parties du véhicule étant amovibles,
**caractérisé en ce que**
le côté secondaire (4) comprend un contact à lames souples (5) et le côté primaire comprend un aimant (6), le contact à lames souples se fermant pour court-circuiter l'enroulement du côté secondaire (4) lors de l'enlèvement de la première partie du véhicule.

2. Dispositif selon la revendication 1,
**caractérisé en ce que**
la première partie du véhicule est formée par le châssis et la deuxième partie du véhicule est formée par un siège.

3. Dispositif selon la revendication 1 ou 2,
**caractérisé en ce que**
les systèmes de retenue (15), des moyens (13, 12) de diagnostic et de commande des systèmes de retenue (15) sont disposés sur le côté secondaire.
